# FASCICULE DE BREVET EUROPEEN

(11) **EP 2 988 249 B1**
(45) Date de publication et mention de la délivrance du brevet: **24.05.2017**
(21) Numéro de dépôt: 15179889.9
(22) Date de dépôt: 05.08.2015
(51) Int. Cl.: G06K 9/00

(54) **PROCÉDÉ DE DÉTERMINATION, DANS UNE IMAGE, D'AU MOINS UNE ZONE SUSCEPTIBLE DE REPRÉSENTER AU MOINS UN DOIGT D'UN INDIVIDU**
VERFAHREN ZUR BESTIMMUNG AUF EINEM BILD MINDESTENS EINER GEEIGNETEN ZONE ZUR DARSTELLUNG MINDESTENS EINES FINGERS EINER PERSON
METHOD FOR DETERMINING, IN AN IMAGE, AT LEAST ONE AREA LIKELY TO REPRESENT AT LEAST ONE FINGER OF AN INDIVIDUAL

(30) Priorité: 06.08.2014 FR 1457659
(43) Date de publication de la demande: 24.02.2016
(73) Titulaire: MORPHO, 92130 Issy-Les-Moulineaux (FR)
(72) Inventeur: BELIARD, Cédric, 92130 ISSY-LES-MOULINEAUX (FR); BRONSART, Sébastien, 92130 ISSY-LES-MOULINEAUX (FR); THUILLIER, Cédric, 92130 ISSY-LES-MOULINEAUX (FR)
(74) Mandataire: Decorchemont, Audrey Véronique Christèle

(56) Documents cités:
- WO-A1-2007/000504
- DE-C1- 19 612 949
- US-A1- 2009 208 070
- US-A1- 2013 182 077
- RIOUX M: "COLOR 3-D ELECTRONIC IMAGING OF THE SURFACE OF THE HUMAN BODY", PROCEEDINGS OF SPIE, S P I E - INTERNATIONAL SOCIETY FOR OPTICAL ENGINEERING, US, vol. 2277, 28 juillet 1994 (1994-07-28), pages 42-54, XP000563365, ISSN: 0277-786X, DOI: 10.1117/12.191892 ISBN: 978-1-62841-467-7

## Description

L'invention concerne un procédé de détection, dans une image d'une main, de zones de l'image susceptibles de contenir au moins une empreinte de doigt de cette main.

### ARRIERE PLAN DE L'INVENTION

Il est connu du document WO2009/112717, un procédé de détection d'empreinte de doigt dans une image d'une main d'un individu acquise à la volée, sans contact avec la main. Dans ce procédé, pour identifier l'empreinte de doigt dans l'image, on utilise des mires lumineuses qui sont projetées sur la main puis on génère une image monochrome dans une des couleurs projetées et on analyse cette image monochrome pour y chercher des formes caractéristiques d'une empreinte telles que des déviations locales des stries, des formes / contours de stries, la position de pores. Dès lors que ces formes caractéristiques sont trouvées dans l'image, on sait que l'on a identifié une image représentant une empreinte. Ce procédé de détection nécessite la projection de mires particulières et l'analyse de l'image pour y chercher des caractéristiques représentatives d'empreintes. Il serait souhaitable de simplifier le procédé de détection d'empreinte de main dans une image. Le document US2013/182077 présente aussi un procédé de détection d'empreinte dans une image.

### OBJET DE L'INVENTION

L'invention a pour objet l'obtention d'un procédé alternatif de détection de zones susceptibles de contenir au moins une empreinte de doigt dans une image d'au moins une portion de main d'un individu.

### RESUME DE L'INVENTION

En vue de réaliser cet objet, il est proposé selon l'invention, un procédé de détection de zones susceptibles de contenir au moins une empreinte de doigt dans une image d'au moins une portion de main d'un individu, ce procédé étant essentiellement caractérisé en ce qu'il comporte :
a) une étape d'acquisition de l'image d'au moins une portion éclairée de main à l'aide d'un capteur optique et
b) une étape de détermination d'une pluralité de zones de l'image acquise, chaque zone ainsi déterminée étant une zone continue de points de l'image acquise qui présentent chacun un niveau d'intensité lumineuse supérieur ou égal à une valeur seuil d'intensité lumineuse sélectionnée pour la détermination de la zone ;
c) une première étape de sélection parmi les zones déterminées, des zones qui sont susceptibles de représenter au moins une empreinte d'un doigt, cette sélection étant réalisée à l'aide d'au moins un critère de filtrage d'un premier type, choisi parmi un critère d'identification de forme de doigt et/ou un critère d'identification de texture type d'une empreinte de doigt et/ou un critère d'identification d'une couleur type d'un doigt.

L'image acquise est composée d'une pluralité de points juxtaposés aussi appelés pixels.

Pour déterminer une zone, on utilise des caractéristiques communes entre les points de la zone, en l'occurrence :
- les niveaux propres d'intensité lumineuse de chacun des points de la zone sont tous supérieurs ou égaux à une valeur seuil d'intensité sélectionnée ; et
- chaque point de la zone touche / est accolé avec au moins un autre point de cette zone.

L'expression zone continue de points implique que la zone est uniquement composée de points qui touchent chacun au moins un autre point de la zone.

Un premier point qui présente un niveau d'intensité lumineuse propre supérieur ou égal à la valeur seuil d'intensité lumineuse sélectionnée mais qui ne serait pas accolé / adjacent avec aucun autre point présentant aussi un niveau propre d'intensité lumineuse supérieur ou égal à ladite seuil d'intensité lumineuse sélectionnée serait exclu de la zone contenant ce premier point.

Le principe de détermination des zones qui est utilisé dans le procédé selon l'invention s'apparente au principe utilisé dans les algorithmes dits de détermination de ligne de partage des eaux. Ces algorithmes de détermination de ligne de partage des eaux sont utilisés dans d'autres domaines techniques éloignés de celui de l'identification d'empreintes dans des images. Typiquement, une zone déterminée à l'étape de détermination de zone est délimitée extérieurement par une ligne dite de partage des eaux.

Le procédé selon l'invention permet de tirer parti de la variation d'intensité lumineuse sur l'image acquise, qui est plus importante au centre d'un doigt donné et décroissante en allant vers les bords de ce doigt. Cette propriété de variation d'intensité lumineuse est liée à la forme pseudo cylindrique du doigt. Lorsque l'image d'un doigt éclairé, de forme pseudo cylindrique, est acquise, à l'aide d'un capteur optique et sans contact avec cette main, on constate que la propriété de variation d'intensité lumineuse est visible sur la zone de l'image photographique acquise qui contient ce doigt. Le procédé selon l'invention recherche dans l'image acquise, les zones présentant des points adjacents qui forment une zone continue de points et qui ont des niveaux d'intensité lumineuse propres supérieurs ou égaux à des valeurs seuil d'intensité sélectionnées. Ainsi pour chaque valeur seuil sélectionnée, on détecte les zones de forte intensité lumineuse, qui sont les plus susceptibles de contenir au moins une partie haute d'un doigt et par conséquent les plus susceptibles de contenir / représenter au moins une empreinte digitale.

Ce procédé selon l'invention est peu couteux en calculs mais il facilite grandement le travail de localisation des empreintes digitales dans une image de main acquise à la volée. Il permet en outre de ne pas avoir à chercher des formes caractéristiques d'empreintes (stries, circonvolutions) dans des portions de l'image qui sont peu susceptibles d'en contenir. Grâce au procédé selon l'invention, la recherche d'empreintes est ciblée vers les zones de l'image où elle a le plus de chances d'aboutir à l'identification d'une empreinte. Le procédé permet ainsi un gain de temps et de ressources de calcul.

Pour la compréhension de l'invention, le terme sans contact implique que le doigt est éloigné de tout élément mécanique de calage/localisation susceptible de le déformer. En effet, lors d'une mise en contact d'un doigt sur un élément mécanique tel qu'une vitre de scanner ou une cale de positionnement de doigt par rapport au capteur optique, on déforme le doigt et il est alors probable que la zone à forte intensité lumineuse corresponde à une autre zone du doigt que celle susceptible de contenir une empreinte digitale papillaire.

Pour cela, le procédé de l'invention est réalisé sans contact, c'est-à-dire alors que le doigt n'est ni callé pour être positionné par rapport à l'organe d'acquisition optique, ni mis en contact contre un quelconque élément mécanique. En d'autres termes, le procédé selon l'invention est mis en oeuvre par acquisition d'une image de doigt prise à la volée, alors que le doigt peut avoir un mouvement relatif dans les trois dimensions par rapport au capteur optique.

Le procédé selon l'invention est particulièrement pratique à mettre en oeuvre puisqu'il ne nécessite pas de positionner le doigt, via des butées mécaniques, lors de l'acquisition d'image.

Après avoir ciblé les zones déterminées pouvant contenir des empreintes, le procédé affine ce ciblage lors d'une première étape de sélection, parmi les zones déterminées, des zones qui sont susceptibles de représenter au moins une empreinte d'un doigt.

Cette sélection est réalisée à l'aide d'au moins un critère de filtrage d'un premier type, choisi parmi un critère d'identification de forme de doigt et/ou un critère d'identification de texture type d'une empreinte de doigt et/ou un critère d'identification d'une couleur type d'un doigt.

Les zones non sélectionnées lors de cette première étape de filtrage, ne sont pas retenues pour la suite du procédé ce qui permet de cibler les zones les plus susceptibles de contenir des empreintes.

Le critère d'identification de forme de doigt consiste à retenir les zones déterminées qui sont allongées et sont par conséquent susceptibles de représenter le pourtour d'une empreinte d'un doigt. En effet, la forme générale d'une empreinte de doigt est généralement plus longue que large.

Ainsi ce critère consiste à retenir les zones dont le rapport longueur sur largeur est supérieur à un seuil. On peut par exemple définir la longueur de la zone comme sa longueur suivant son axe principal et sa largeur suivant l'axe perpendiculaire à son axe principal.

Le critère d'identification de texture type d'une empreinte de doigt consiste à rechercher dans la zone déterminée la présence d'une texture d'empreinte, c'est à dire une zone d'image contenant des pores et/ou des lignes capillaires définissant arcs et/ou boucles et/ou verticilles.

Dans un mode préférentiel de mise en oeuvre du procédé, on sélectionne un ensemble de valeurs seuil d'intensité lumineuse comprises entre une valeur seuil minimale d'intensité et une valeur seuil maximale d'intensité et on réalise l'étape de détermination d'une pluralité de zones de l'image acquise à l'aides de chacune des valeurs seuil de l'ensemble de valeurs seuil, puis on mémorise la pluralité des zones de l'image capturée qui ont été déterminées avec chacune des valeurs seuil de l'ensemble de valeurs seuil.

Grâce à l'ensemble des différentes valeurs seuil choisies on obtient un ensemble de zones de l'image capturée qui sont chacune susceptible de représenter au moins une partie d'un doigt. Ainsi, l'ensemble des zones comprend des zones susceptibles de représenter un même doigt ou plusieurs doigts. L'usage de plusieurs valeurs seuil permet de fixer une sensibilité de détection de zones en choisissant une valeur seuil donnée.

A chaque valeur seuil sélectionnée, on va identifier une ou des zones de l'image qui sont différentes de la ou des zones de l'image identifiées avec une autre valeur seuil. En mémorisant toutes les zones déterminées avec les différentes valeurs seuil, on enrichie l'ensemble des zones possibles de l'image capturée qui sont susceptibles de contenir / représenter au moins un doigt. On facilite ainsi le travail d'identification des zones d'image par un traitement systématique et homogène de l'image dont le résultat est une liste ciblée de zones susceptibles de représenter une empreinte de doigt. Le travail de recherche d'une empreinte de doigt peut ainsi être limité à une partie des zones déterminées et mémorisées dans l'ensemble de zones. On évite ainsi d'avoir à rechercher la présence d'une empreinte de doigt dans des portions de l'image qui sont extérieures aux zones déterminées / énumérées et on limite ainsi le volume de calculs nécessaires à l'identification d'empreintes dans l'image acquise.

Selon un autre mode de réalisation de l'invention, le procédé comporte en outre une seconde étape de sélection consistant à filtrer les zones préalablement sélectionnées à l'issue de la première étape de sélection, à l'aide d'au moins un critère de filtrage d'un second type. Ce critère de filtrage d'un second type est choisi parmi :
- un critère d'éloignement maximum entre des zones, ce critère d'éloignement maximum étant déterminé pour ne retenir dans un ensemble de zones retenues, que des zones préalablement sélectionnées à l'issue de la première étape de sélection, qui sont voisines entre elles et qui sont susceptibles de représenter uniquement des portions d'empreintes de doigts d'une même main; et/ou
- un critère de ratio surfacique entre zones voisines entre elles, ce critère de ratio surfacique étant déterminé pour que le rapport entre des surfaces de zones voisines entre elles soit compris entre des valeurs minimale et maximale prédéterminées de ratio surfacique, les zones voisines entre elles et répondant à ce critère de ratio surfacique étant retenues dans un ensemble de zones retenues ; et/ou
- un critère d'orientation relative entre zones voisines entre elles, les zones voisines entre elles qui répondent à ce critère d'orientation étant retenues dans un ensemble de zones retenues.

Alors que chacun des critères de filtrage du premier type est déterminé pour analyser les particularités individuelles des zones, zone par zone, chacun des critères de filtrage du second type est déterminé pour analyser la cohérence entre des zones déterminées voisines afin de :
- retenir les zones déterminées susceptibles de représenter des empreintes d'une même main ; et de
- rejeter les zones déterminées qui ne semblent pas susceptibles de représenter des empreintes d'une même main.

Le critère d'éloignement maximum entre des zones permet, par exemple, de ne conserver dans l'ensemble de zones retenues que des zones voisines, c'est-à-dire des zones pas trop éloignées entre elles, c'est-à-dire des zones d'image représentant des parties éloignées les unes des autres d'une distance d'éloignement inférieure à un nombre maximum prédéterminé de pixels.

Le critère de ratio surfacique permet, par exemple, de ne pas retenir deux zones voisines ayant des superficies respectives trop différentes l'une de l'autre, et de retenir les zones dont les superficies respectives sont proches l'une de l'autre, c'est-à-dire dont le ratio entre ces superficies est compris dans une plage de valeurs de ratio prédéterminée.

Le critère d'orientation relative entre zones voisines entre elles va maintenant être présenté. Chaque zone déterminée présente une dimension longitudinale ou dimension principale qui est sa dimension la plus importante, c'est-à-dire sa longueur propre. Chaque zone présente un axe principal propre qui s'étend parallèlement à la dimension principale propre à cette zone. L'angle d'orientation formé entre deux zones voisines, est l'angle aigu formé entre les axes principaux de ces zones voisines. Par zones voisines, on entend deux zones qui sont espacées entre elles d'une distance inférieure à une distance prédéterminée, par exemple une distance prédéterminée donnée en nombre de pixels, représentative d'un espacement maximum entre deux extrémités de doigts voisins.

Le critère d'orientation est adapté à retenir des zones voisines, dans l'ensemble des zones retenues, uniquement si l'angle d'orientation entre ces zones voisines est inférieur à une valeur d'angle maximale prédéterminée, typiquement inférieure à 45° d'angle et préférentiellement inférieure à 30°.

Ce critère d'orientation permet de distinguer :
- des zones de l'image susceptibles de contenir des empreintes appartenant à une même main, c'est-à-dire des empreintes qui sont voisines et orientées l'une par rapport à l'autre d'au plus 45° et préférentiellement d'au plus 30° ;
- d'autres zones de l'image qui sont susceptibles de contenir des empreintes appartenant à plusieurs mains (typiquement des empreintes voisines disposées à 60° d'angle l'une par rapport à l'autre appartiennent vraisemblablement à plusieurs mains et ne sont pas retenues par le critère d'orientation).

Dans un mode particulier de réalisation du procédé, l'image acquise est une image en couleurs et pour déterminer les niveaux d'intensité lumineuse des points de l'image acquise, on utilise une image en niveaux de gris générée à partir de l'image acquise en couleur.

L'évaluation du niveau d'intensité propre à chaque point de l'image acquise en couleur est réalisée à l'aide de la mesure du niveau d'intensité lumineuse du point de l'image en niveau de gris qui correspond au point de l'image acquise en couleur.

La mesure de niveau d'intensité lumineuse est plus aisée à réaliser sur l'image en niveau de gris que sur l'image couleur. Ainsi, ce mode de réalisation facilite le traitement de l'image en vue de l'identification des zones de l'image acquise en couleur qui sont susceptibles de contenir / représenter au moins une empreinte d'un doigt.

On note que cette image en niveau de gris présente préférentiellement / sensiblement les mêmes niveaux de luminance et de chrominance que l'image acquise en couleur. Toutefois, cette image en niveau de gris peut être un négatif de l'image acquise en couleur, dans ce cas les niveaux de luminance et de chrominance de l'image en négatif sont inversés par rapport à ceux de l'image acquise en couleur. Même si l'image en niveau de gris est un négatif de l'image acquise en couleur, la condition de sélection des points de la zone continue de points dans l'image acquise reste toujours une fonction des niveaux d'intensité lumineuse respectifs des points de l'image couleur estimés à l'aide de l'image en niveaux de gris.

Selon un autre aspect, l'invention porte sur un dispositif de détermination, dans une image, d'au moins une zone de cette image qui est susceptible de représenter au moins une empreinte de doigt d'un individu, ce dispositif étant adapté à mettre en oeuvre l'un quelconque des modes de réalisation du procédé selon l'invention.

Typiquement, ce dispositif de détermination selon l'invention comprend un téléphone intelligent, dit smartphone.

Grâce à sa facilité de mise en oeuvre, le procédé selon l'invention permet de cibler dans une image prise avec un téléphone portable ou une tablette numérique ou un ordinateur portable, les zones les plus susceptibles de représenter des empreintes, ce qui simplifie les opérations de recherche de caractéristiques d'empreintes dans l'image. Le volume de calculs nécessaires à la recherche de caractéristiques d'empreintes dans une image est ainsi réduit ce qui facilite la mise en oeuvre de l'invention avec des moyens de calcul limités comme c'est le cas avec un téléphone portable.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
- La figure 1 représente la chronologie des étapes du procédé selon l'invention ;
- la figure 2 présente un détail de l'étape de détermination de la pluralité de zones chacune susceptible de représenter une empreinte ;
- la figure 3a présente une vue en perspective du dispositif de détermination de zones selon l'invention alors qu'il est utilisé pour produire une image acquise sur laquelle sont identifiées des zones représentant chacune au moins une empreintes ;
- la figure 3b présente l'image en niveaux de gris générée à partir de l'image en couleur acquise de la figure 3a ;
- la figure 3c symbolise une ligne de l'image 3b et un graphique présentant la variation du niveau d'intensité le long de cette ligne, ce graphique représente les niveaux d'intensité lumineuse des points de la ligne en niveaux de gris ;
- la figure 3d représente l'image acquise en couleur sur laquelle on a superposé des cadres qui identifient chacun un emplacement d'une zone déterminée ;
- les figures 3e1, 3e2, 3e3, 3e4 représentent chacune une portion de main et les zones déterminées susceptibles de représenter une empreinte, ces zones varient d'une image à l'autre car chaque image est établie avec une valeur seuil d'intensité sélectionnée qui lui est propre.

### DESCRIPTION DETAILLEE DE L'INVENTION

Comme indiqué précédemment, l'invention porte sur un procédé de détection de zones chacune susceptible de contenir au moins une empreinte de doigt dans une image d'une portion de main.

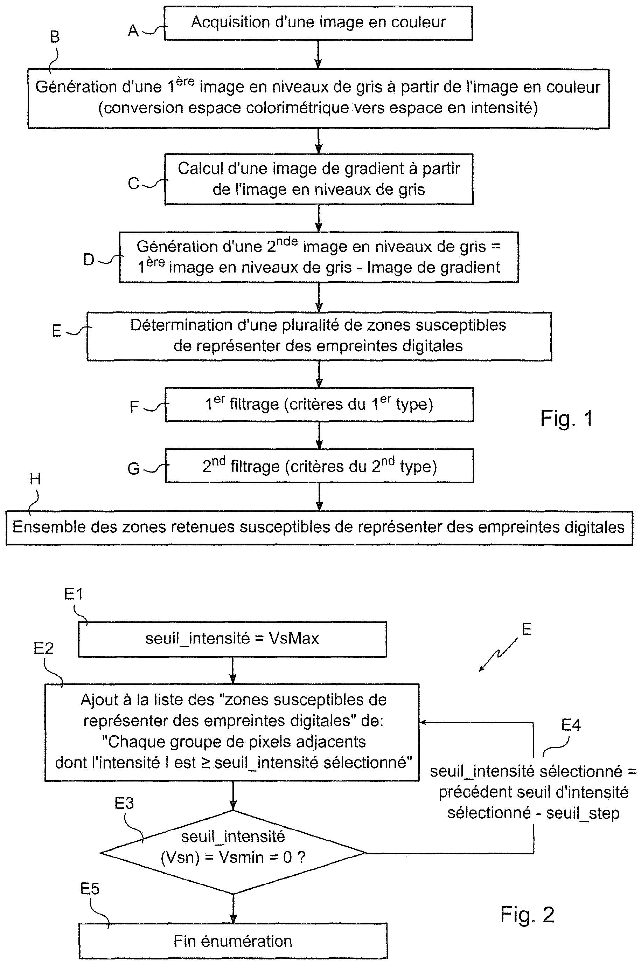

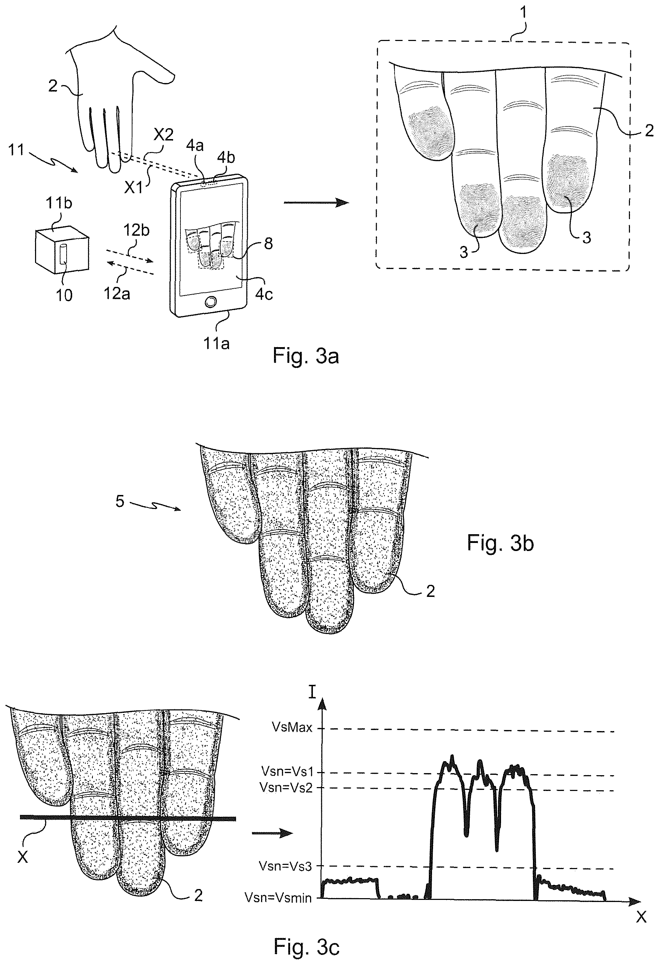

Ce procédé qui sera détaillé ci-après en référence aux figures 1 et 2 est mis en oeuvre à l'aide d'un dispositif de détermination 11 de zone (s) dans une image. Comme on le voit en particulier sur la figure 3a, ce dispositif 11 comporte :
- un groupe local 11a de moyens assemblés ensemble ; et éventuellement
- un groupe distant 11b de moyens d'identification d'individus à partir de caractéristiques d'empreintes digitales.

Typiquement, le groupe local 11a de moyens assemblés ensemble est un téléphone intelligent.

Ce groupe local 11a de moyens assemblés et reliés ensemble comprend :
∘ au moins un capteur optique 4a ;
∘ au moins un moyen optique d'éclairage 4b ;
∘ au moins un processeur ;
∘ au moins une mémoire ;
∘ au moins un programme qui lorsqu'exécuté par le processeur, met en oeuvre le procédé de détermination selon l'invention ;
∘ préférentiellement un moyen d'affichage d'image acquise tel qu'un écran 4c ; et
∘ éventuellement des moyens de télécommunication adaptés à échanger des données avec le groupe 11b de moyens d'identification d'individus qui est distant dudit groupe local 11a.

Le groupe local 11a exécute le procédé selon l'invention en local et lorsqu'il a déterminé et retenu des zones de l'image acquise chacune susceptible de contenir au moins une empreinte digitale, il transmet au groupe distant 11b des données 12a contenant des caractéristiques représentatives des empreintes représentées sur les zones déterminées et retenues de l'image.

Le groupe distant 11b reçoit ces caractéristiques représentatives d'empreintes et compare des caractéristiques de chacune des zones de l'ensemble de zones retenues avec des caractéristiques d'images d'empreintes contenues dans la base de données préenregistrée 10 mémorisée au niveau du groupe distant 11b.

En cas de correspondance entre des caractéristiques d'une des zones de l'ensemble de zones retenues Z1a, Z1b, Z1c, Z1d, Z2a, Z2b, Z2d, Z3a et d'une des empreintes digitales de la base de données préenregistrée 10, alors le groupe distant 11b mémorise un lien d'identification représentatif de cette correspondance.

On considère qu'il y a correspondance entre des caractéristiques d'une des zones et une empreinte digitale si au moins un certain nombre de critères de correspondance prédéterminés sont vérifiés.

Ce lien d'identification et/ou une notification 12b confirmant l'identification est transmis par le groupe distant 11b au groupe local 11a.

Le processeur du groupe local 11a peut conditionner l'exécution d'une action à la réception préalable du lien d'identification et/ou de la notification 12b confirmant l'identification. Par exemple l'action conditionnée peut être la validation d'un droit d'accès à une application à exécuter, comme une application de paiement ou une application de déverrouillage d'écran 4c.

Dans certains cas particuliers, la base de données préenregistrée peut être enregistrée dans la mémoire du groupe local 11a et dans ce cas, le groupe local 11a:
- compare des caractéristiques de chacune des zones Z1a, Z1b, Z1c, Z1d, Z2a, Z2b, Z2d, Z3a de l'ensemble de zones retenues avec des caractéristiques d'images d'empreintes digitales contenues dans la base de données préenregistrée au niveau du groupe local 11a ; et
- en cas de correspondance entre des caractéristiques d'une des zones de l'ensemble de zones retenues et d'une des empreintes digitales de la base de données préenregistrée, alors le groupe local 11a de moyens mémorise le lien d'identification représentatif de cette correspondance et/ou génère une notification confirmant l'identification ; et
- le processeur du groupe local 11a conditionne l'exécution d'une action à la génération préalable du lien d'identification et/ou de la notification confirmant l'identification. Les actions conditionnées sont les mêmes que celles décrites précédemment ou toute autre action.

Le procédé de détection de zones chacune susceptible de contenir au moins une empreinte de doigt dans une image va maintenant être décrit en référence aux figures 1 et 2.

Ce procédé comporte une étape d'acquisition A d'une image couleur d'une main éclairée 2 alors qu'elle est déplacée en face d'un axe optique principal X1 du capteur optique 4a. Cet éclairage est préférentiellement réalisé à l'aide du moyen optique d'éclairage artificiel 4b qui présente un axe principal d'éclairage X2.

Lors de cette étape d'acquisition A d'image, la main est déplacée de manière qu'elle ait une vitesse de déplacement par rapport à l'axe optique principal X1 inférieure à une vitesse maximale prédéterminée, en l'occurrence au plus 1 mètre par seconde, et de manière qu'elle soit à une distance du capteur optique inférieure à une distance maximale d'acquisition prédéterminée, en l'occurrence au plus 1 mètre.

Comme le capteur optique 4a et le moyen optique d'éclairage 4b sont liés mécaniquement entre eux et sont agencés pour que l'axe optique X1 et l'axe principal d'éclairage X2 soient parallèles entre eux, on constate sur l'image couleur acquise 1, que les parties saillantes comme le milieu des doigts qui sont de formes pseudo cylindriques sont les plus éclairées et que les parties en creux de la main, comme les bords des doigts, sont les moins éclairées.

Les points de l'image les plus éclairés qui appartiennent à une même continuité de points définissent une zone susceptible de contenir au moins une empreinte. Le procédé selon l'invention permet de déterminer ces zones.

A cet effet, on réalise une étape B de génération d'une première image en niveau de gris à partir de l'image en couleur. Cette opération permet de réaliser une conversion de l'espace colorimétrique propre à l'image acquise en couleur vers un espace en intensité lumineuse propre à une image en niveaux de gris.

Après mise en oeuvre de cette étape B, on met en oeuvre une étape C de calcul d'une image de gradient représentant la première image en niveaux de gris.

Après avoir calculé cette image de gradient, on met en oeuvre une étape D au cours de laquelle on génère une seconde image en niveaux de gris qui correspond à la première image en niveaux de gris à laquelle on a soustraite l'image de gradient.

L'étape B permet de passer d'un espace couleur à un espace niveau de gris dans lequel la suite des traitements sera effectuée. Les étapes C et D permettent d'obtenir une seconde image en niveau de gris accentuant les écarts entre niveaux d'intensité des points sont accentués par rapport à la première image en niveau de gris (par exemple on accentue les écarts d'intensité entre une zone éclairée de centre du doigt et une zone moins éclairée de bord du doigt).

A l'aide de cette seconde image en niveaux de gris, on détermine, à l'étape E, une pluralité de zones Z1a, Z1b, Z1c, Z1d, Z2a, Z2b, Z2d, Z3a qui sont chacune susceptibles de représenter au moins empreinte digitale 3.

Cette étape E est détaillée à la figure 2. Lors d'une première sous étape E1, on sélectionne une valeur seuil maximale d'intensité VsMax. Puis on à l'étape E2, on recherche dans 1a seconde image en niveaux de gris, l'ensemble des points ayant un niveau d'intensité lumineuse propre supérieur ou égal à la valeur seuil sélectionnée Vsn.

On identifie dans cette seconde image en niveaux de gris, l'ensemble des zones continues de points dont les niveaux d'intensité lumineuse respectifs sont supérieurs ou égaux à VsMax. Puis, on mémorise toutes ces zones continues ainsi identifiées dans un ensemble de zones.

Après mise en oeuvre de la sous étape E2, on met en oeuvre la sous étape E3, lors de laquelle on vérifie si la valeur seuil d'intensité qui vient d'être sélectionnée est égale à une valeur minimale prédéterminée Vsmin. Tant que cela n'est pas constaté, on réalise une sous étape E4 consistant à calculer une nouvelle valeur seuil d'intensité sélectionnée. Cette nouvelle valeur seuil d'intensité sélectionnée est égale à la précédente valeur seuil sélectionnée diminuée d'une valeur de pas prédéterminée « seuil_step ».

Après réalisation de cette sous étape E4, on réalise à nouveau la sous étape E2 mais en utilisant la nouvelle valeur de seuil calculée à la sous étape E4.

Ceci permet de déterminer de nouvelles zones continues de points qui sont toutes exclusivement composées de points ayant des niveaux d'intensité lumineuse propres supérieurs ou égaux à la nouvelle valeur seuil. Ces zones sont également mémorisées dans l'ensemble de zones déterminées et susceptibles de représenter chacune au moins une empreinte.

Lorsqu'à la sous étape E3, on constate que la valeur seuil sélectionnée qui vient d'être utilisée à la sous étape E2 précédente est égale à Vsmin, alors on passe à la sous étape E5 qui consiste à signaler la fin de l'énumération des zones susceptibles de représenter une empreinte.

Le détail de cette étape E de détermination de la pluralité de zones est aussi compréhensible à l'aide de la figure 3C.

Si l'on se place le long d'une ligne droite X composée de plusieurs points de l'image en niveaux de gris, on peut représenter une courbe de variation, point par point, de niveau d'intensité lumineuse I le long de cette ligne X.

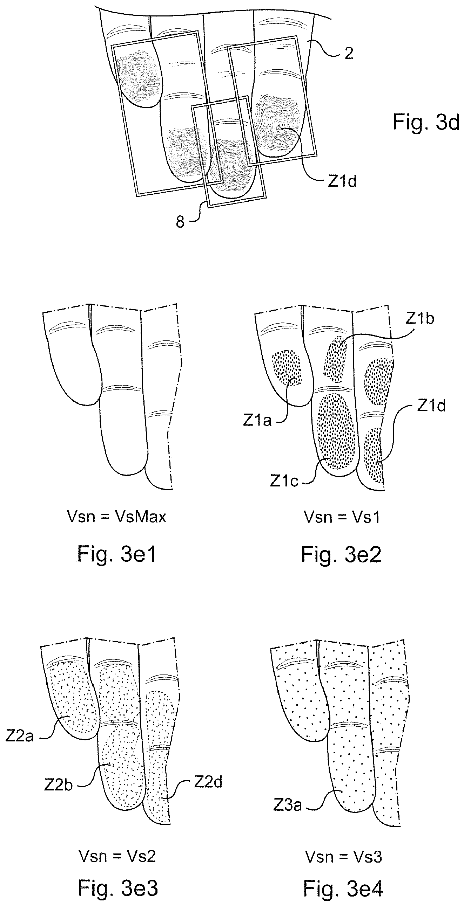

On constate que cette variation est étalée entre les seuils Vsmin et VsMax et passe parfois au-dessus de seuils intermédiaires Vs3, Vs2, Vs1. Si l'on visualise les zones déterminées avec une valeur seuil Vsn=VsMax, on obtient une image visible à la figure 3e1 ne comportant pas de zone. Sur cette figure 3e1, aucun des points de l'image présente un niveau d'intensité lumineuse supérieur ou égal à VsMax.

En sélectionnant la valeur Vs1, on constate qu'une partie des points de la ligne X ont une intensité lumineuse propre supérieure ou égale à Vs1. Les zones continues Z1a, Z1b, Z1c, Z1d, formées de ces points sont visibles à la figure 3e2.

En sélectionnant une nouvelle valeur Vs2 inférieure à Vs1, on obtient à nouveau des zones Z2a, Z2b, Z2d visibles à la figure 3e3.

Enfin, avec une autre valeur seuil Vs3 inférieure à Vs2, on obtient une seule nouvelle zone continue visible à la figure 3e4.

On constate que chaque zone déterminée avec une valeur de seuil d'intensité Vsn forte est toujours incluse à l'intérieur d'une zone déterminée avec une valeur de seuil d'intensité faible Vsn.

On peut choisir VsMax et Vsmin pour que les valeurs seuil sélectionnée permettent chacune la génération d'un nombre de zone déterminées compris entre un nombre minimum, par exemple 3 zones et un nombre maximum de zones par exemple 8 zones. Ceci permet de limiter le volume de l'ensemble des zones déterminées.

Une fois arrivé à la fin du processus d'énumération / détermination des zones, c'est-à-dire à l'issue de l'étape E, on réalise des étapes successives de filtrage F et G destinées à identifier les zones de l'image qui sont fortement susceptibles de comporter chacune au moins une empreinte de doigt.

L'étape F est mise en oeuvre avec des critères de filtre d'un premier type qui permettent d'analyser une par une les zones de l'ensemble de zones déterminés.

Ces critères du premier type peuvent être des critères de taille de zone, de forme de zone (allongées), ou de présence de caractéristiques représentatives de morphologie d'empreinte.

L'étape G est mise en oeuvre afin de générer à partir des zones retenues à l'étape F, un ensemble de zones retenues qui sont fortement susceptibles de représenter des empreintes appartenant à une seule et même main d'un individu.

Ces critères d'un second type peuvent être des critères d'espacement maximum entre les zones, de dispositions relatives entre les zones. Selon ce dernier critère, les zones retenues sont celles disposées le long d'une courbe susceptible de s'étendre le long des extrémités papillaires des doigts d'une même main.

L'image acquise 1 peut être issue d'une série d'images 1 qui appartiennent à un flux vidéo généré avec ledit capteur optique 4a alors que la main est éclairée par le moyen optique d'éclairage 4b.

Le flux vidéo comprend une succession d'images. Ces images du flux vidéo sont utilisées à tour de rôle comme image acquise 1 et les zones susceptibles de contenir au moins une empreinte de doigt sont déterminées pour chacune des images de la succession d'images du flux vidéo.

On note qu'il est possible de rechercher les zones qui se correspondent dans la succession d'images, c'est-à-dire les zones qui représentent une même empreinte de doigt et de choisir parmi les zones qui se correspondent, la zone qui contient la meilleure représentation de l'empreinte donnée.

Cette zone est enregistrée dans l'ensemble de zones retenues, les autres zones correspondantes des autres images étant exclues de l'ensemble des zones retenues.

Idéalement, comme on le voit sur les figures 3a et 3d, on affiche au moins une image du flux vidéo sur un moyen d'affichage 4c et on superpose sur cette image affichée, un symbole graphique 8, tel un cadre, indiquant un emplacement de l'image 1 où se trouve ladite au moins une zone Z1d de l'image acquise qui est susceptible de représenter au moins une empreinte de doigt. Ainsi, on repère sur l'image affichée chacune des zones de l'ensemble de zones retenues à l'issue des filtrages des étapes F et G. Cet ensemble des zones retenue est finalisé à l'étape H, après mise en oeuvre des étapes de filtrage F et G.

Ces images du flux vidéo sont préférentiellement affichées en temps réel, c'est-à-dire après un temps de latence n'excédant pas 2 secondes entre le moment de la capture de l'image dans le flux vidéo et le moment de son affichage sur l'écran 4c avec le(s) symbole(s) 8 superposé(s).

L'affichage des cadres 8 permet à l'utilisateur de savoir si l'identification d'empreinte est satisfaisante ou non. Un symbole particulier peut également être affiché pour signaler à l'utilisateur que son empreinte a bien été identifiée dans la base de données préenregistrée.

Un avantage du procédé selon l'invention est qu'il peut être mis en oeuvre dans des conditions de lumières variables, et cela même si l'image acquise présente un arrière-plan de main qui est mouvant et indéterminé. Ce procédé est ainsi utilisable comme moyen d'identification sur des appareils téléphoniques portables grand public.

On note que l'identification de correspondance entre des caractéristiques d'empreintes de l'image et des caractéristiques d'une base de données d'empreintes peut être réalisée en même temps que l'acquisition de nouvelles images prises à la volée.

## Revendications

1. Procédé de détection de zones (Z1a, Z1b, Z1c, Z1d, Z2a, Z2b, Z2d, Z3a) susceptibles de contenir au moins une empreinte de doigt (3) dans une image (1) d'au moins une portion de main (2) d'un individu, le procédé comportant :
a) une étape d'acquisition (A) de l'image d'au moins une portion éclairée de main (2) à l'aide d'un capteur optique (4a) et sans contact avec cette main (2) ; et le procédé étant par ailleurs **caractérisé en ce que** qu'il comporte aussi :
b) une étape de détermination (E) d'une pluralité de zones (Z1a, Z1b, Z1c, Z1d) de l'image acquise (1), chaque zone ainsi déterminée étant une zone continue de points de l'image acquise (1) qui présentent chacun un niveau d'intensité lumineuse (I) supérieur ou égal à une valeur seuil (Vsn, Vs1) d'intensité lumineuse sélectionnée pour la détermination de la zone ainsi déterminée ; et
c) une première étape de sélection (F) parmi les zones déterminées, des zones qui sont susceptibles de représenter au moins une empreinte d'un doigt (3), cette sélection (F) étant réalisée à l'aide d'au moins un critère de filtrage d'un premier type, choisi parmi un critère d'identification de forme de doigt et/ou un critère d'identification de texture type d'une empreinte de doigt et/ou un critère d'identification d'une couleur type d'un doigt et dans lequel on sélectionne un ensemble de valeurs seuil (Vsn, Vs, Vs2, Vs3) d'intensité lumineuse (I) comprises entre une valeur seuil minimale (Vsmin) d'intensité (I) et une valeur seuil maximale (VsMax) d'intensité (I) et on réalise l'étape de détermination (E) d'une pluralité de zones de l'image acquise à l'aides de chacune des valeurs seuil (Vs1, Vs2, Vs3) de l'ensemble de valeurs seuil (Vsn), puis on mémorise la pluralité des zones (Z1a, Z1b, Z1c, Z1d, Z2a, Z2b, Z2d, Z3a) de l'image (1) capturée qui ont été déterminées avec chacune des valeurs seuil (Vs1, Vs2, Vs3) de l'ensemble de valeurs seuil (Vsn).

2. Procédé de détection selon la revendication 1, comportant en outre une seconde étape de sélection (G) consistant à filtrer les zones préalablement sélectionnées (Z1a, Z1b, Z1c, Z1d, Z2a, Z2b, Z2d, Z3a) à l'issue de la première étape de sélection (F), à l'aide d'au moins un critère de filtrage d'un second type, choisi parmi :
- un critère d'éloignement maximum entre des zones (Z1a, Z1b, Z1c, Z1d, Z2a, Z2b, Z2d, Z3a), ce critère d'éloignement maximum étant déterminé pour ne retenir dans un ensemble de zones retenues que des zones préalablement sélectionnées à l'issue de la première étape de sélection (F), qui sont voisines entre elles et qui sont susceptibles de représenter uniquement des portions d'empreintes de doigts d'une même main (2); et/ou
- un critère de ratio surfacique entre zones (Z1a, Z1b, Z1c, Z1d, Z2a, Z2b, Z2d, Z3a) voisines entre elles, ce critère de ratio surfacique étant déterminé pour que le rapport entre des surfaces de zones voisines entre elles soit compris entre des valeurs minimale et maximale prédéterminées de ratio surfacique, les zones voisines entre elles et répondant à ce critère de ratio surfacique étant retenues dans un ensemble de zones retenues ; et/ou
- un critère d'orientation relative entre zones (Z1a, Z1b, Z1c, Z1d, Z2a, Z2b, Z2d, Z3a) voisines entre elles, les zones voisines entre elles qui répondent à ce critère d'orientation étant retenues dans un ensemble de zones retenues.

3. Procédé de détection selon l'une quelconque des revendications 1 ou 2, dans lequel l'image acquise (1) est une image en couleurs et pour déterminer les niveaux d'intensité lumineuse (I) des points de l'image acquise (1), on utilise une image en niveaux de gris (5) générée à partir de l'image acquise (1) en couleur.

4. Procédé de détection selon l'une quelconque des revendications 1 à 3, dans lequel on compare des caractéristiques de chacune des zones (Z1a, Z1b, Z1c, Z1d, Z2a, Z2b, Z2d, Z3a) de l'ensemble de zones retenues avec des caractéristiques d'images d'empreintes digitales contenues dans une base de données préenregistrée (10) et, en cas de correspondance entre des caractéristiques d'une des zones de l'ensemble de zones retenues et d'une des empreintes digitales de la base de données préenregistrée (10), alors on mémorise un lien d'identification représentatif de cette correspondance.

5. Procédé de détection selon l'une quelconque des revendications précédentes, dans lequel pour réaliser l'étape d'acquisition (A) de l'image (1), on déplace la main (2) éclairée en face d'un axe optique principal (X1) du capteur optique (4a).

6. Procédé de détection selon la revendication précédente, dans lequel pour réaliser l'étape d'acquisition (A) de l'image (1), on utilise un moyen optique d'éclairage artificiel (4b) présentant un axe principal d'éclairage (X2) agencé pour éclairer la main au moins au moment de l'acquisition de l'image (1) par le capteur optique (4a).

7. Procédé de détection selon la revendication précédente, dans lequel le capteur optique (4a) et le moyen optique d'éclairage (4b) sont liés mécaniquement entre eux et sont agencés pour que l'axe optique (X1) et l'axe principal d'éclairage (X2) soient parallèles entre eux.

8. Procédé de détection selon l'une quelconque des revendications précédentes, dans lequel l'image acquise (1) est issue d'une série d'images appartenant à un flux vidéo généré avec ledit capteur optique.

9. Procédé de détection selon la revendication précédente, dans lequel on affiche au moins une image du flux vidéo sur un moyen d'affichage (4c) et on superpose sur l'image affichée du flux vidéo, un symbole graphique (8), tel un cadre, indiquant un emplacement de l'image (1) où se trouve ladite au moins une zone (Z1d) de l'image acquise qui est susceptible de représenter au moins une empreinte de doigt.

10. Procédé de détection selon l'une quelconque des revendications 8 ou 9, dans lequel le flux vidéo comprend une succession d'images, chacune des images de cette succession est utilisée à tour de rôle comme image acquise, les zones susceptibles de contenir au moins une empreinte de doigt sont déterminées dans chacune des images de la succession d'images du flux vidéo.

11. Dispositif de détermination (11), dans une image, d'au moins une zone (Z1a, Z1b, Z1c, Z1d, Z2a, Z2b, Z2d, Z3a) de cette image qui est susceptible de représenter au moins une empreinte de doigt d'un individu, ce dispositif étant **caractérisé en ce qu'**il est adapté à mettre en oeuvre le procédé selon l'un quelconque des revendications précédentes.

12. Dispositif de détermination selon la revendication précédente, tel qu'il comprend un téléphone intelligent, dit smartphone.

## Patentansprüche

1. Verfahren zur Erkennung von Zonen (Z1a, Z1b, Z1c, Z1d, Z2a, Z2b, Z2d, Z3a), die dazu geeignet sind, mindestens einen Fingerabdruck (3) in einem Bild (1) mindestens eines Handabschnittes (2) eines Individuums zu enthalten, wobei das Verfahren umfasst:
a) einen Erfassungsschritt (A) zur Erfassung des Bildes mindestens eines beleuchteten Handabschnittes (2) mit Hilfe eines optischen Sensors (4a) und ohne Kontakt mit dieser Hand (2); und wobei das Verfahren darüber hinaus **dadurch gekennzeichnet ist, dass** es ferner umfasst:
b) einen Bestimmungsschritt (E) zur Bestimmung einer Vielzahl von Zonen (Z1a, Z1b, Z1c, Z1d) des erfassten Bildes (1), wobei jede so bestimmte Zone eine kontinuierliche Zone von Punkten des erfassten Bildes (1) ist, die jeweils eine Höhe einer Lichtstärke (I) aufweisen, die größer oder gleich einem Lichtstärken-Schwellwert (Vsn, Vs1) ist, der für die Bestimmung der so bestimmten Zone ausgewählt ist; und
c) einen ersten Auswahlschritt (F) zum Auswählen unter den bestimmten Zonen von Zonen, die geeignet sind, mindestens einen Fingerabdruck (3) darzustellen, wobei diese Auswahl (F) mit Hilfe mindestens eines Filter-kriteriums einer ersten Art erfolgt, ausgewählt unter einem Kriterium zur Identifizierung der Fingerform und/oder einem Kriterium zur Identifizierung des Strukturtyps eines Fingerabdrucks und/oder einem Kriterium zur Identifizierung eines Farbtyps eines Fingers, und bei dem eine Gruppe von Schwellwerten (Vsn, Vs, Vs2, Vs3) von Lichtstärken (I) ausgewählt wird, die zwischen einem minimalen Schwellwert (Vsmin) einer Stärke (I) und einem maximalen Schwellwert (VsMax) einer Stärke (I) liegen, und der Bestimmungsschritt (E) zur Bestimmung einer Vielzahl von Zonen des erfassten Bildes mit Hilfe jedes der Schwellwerte (Vs1, Vs2, Vs3) der Gruppe von Schwellwerten (Vsn) durchgeführt wird, und dann die Vielzahl von Zonen (Z1a, Z1b, Z1c, Z1d, Z2a, Z2b, Z2d, Z3a) des erfassten Bildes (1), die mit jedem der Schwellwerte (Vs1, Vs2, Vs3) der Gruppe von Schwellwerten (Vsn) bestimmt wurden, gespeichert wird.

2. Erkennungsverfahren nach Anspruch 1, ferner umfassend einen zweiten Auswahlschritt (G), der im Filtern der zuvor nach Abschluss des ersten Auswahlschrittes (F) ausgewählten Zonen (Z1a, Z1b, Z1c, Z1d, Z2a, Z2b, Z2d, Z3a) mit Hilfe mindestens eines Filterkriteriums einer zweiten Art besteht, ausgewählt unter:
- einem Kriterium eines maximalen Abstandes zwischen Zonen (Z1a, Z1b, Z1c, Z1d, Z2a, Z2b, Z2d, Z3a), wobei dieses Kriterium des maximalen Abstandes bestimmt wird, um in der Gruppe von berücksichtigten Zonen nur die zuvor nach Abschluss des ersten Auswahlschrittes (F) ausgewählten Zonen zu berücksichtigen, die zueinander benachbart und in der Lage sind, nur Fingerabdruckabschnitte einer selben Hand (2) darzustellen; und/oder
- einem Kriterium eines Flächenverhältnisses zwischen zueinander benachbarten Zonen (Z1a, Z1b, Z1c, Z1d, Z2a, Z2b, Z2d, Z3a), wobei dieses Flächenverhältniskriterium bestimmt wird, damit das Verhältnis zwischen den Flächen zueinander benachbarter Zonen zwischen vorgegebenen Minimal- und Maximalwerten eines Flächenverhältnisses liegt, wobei die zueinander benachbarten Zonen, die dieses Flächenverhältniskriterium erfüllen, in einer Gruppe von berücksichtigten Zonen berücksichtigt werden; und/oder
- einem Kriterium einer relativen Ausrichtung zwischen zueinander benachbarten Zonen (Z1a, Z1b, Z1c, Z1d, Z2a, Z2b, Z2d, Z3a), wobei die zueinander benachbarten Zonen, die dieses Ausrichtungskriterium erfüllen, in einer Gruppe von berücksichtigten Zonen berücksichtigt werden.

3. Erkennungsverfahren nach einem der Ansprüche 1 oder 2, bei dem das erfasste Bild (1) ein Farbbild ist und man zur Bestimmung der Höhen der Lichtstärken (I) der Punkte des erfassten Bildes (1) ein Grauwertbild (5) verwendet, das aus dem erfassten Farbbild (1) erzeugt wird.

4. Erkennungsverfahren nach einem der Ansprüche 1 bis 3, bei dem man die Charakteristika jeder der Zonen (Z1a, Z1b, Z1c, Z1d, Z2a, Z2b, Z2d, Z3a) der Gruppe von berücksichtigten Zonen mit Charakteristika von Bildern von digitalen Abdrücken vergleicht, die in einer zuvor gespeicherten Datenbank (10) enthalten sind, und man im Falle einer Übereinstimmung zwischen den Charakteristika von einer der Zonen der Gruppe von berücksichtigten Zonen und von einem der digitalen Abdrücke der zuvor gespeicherten Datenbank (10) dann eine für diese Übereinstimmung repräsentative Identifizierungsverbindung speichert.

5. Erkennungsverfahren nach einem der vorhergehenden Ansprüche, bei dem man zum Durchführen des Erfassungsschrittes (A) zum Erfassen des Bildes (1) die beleuchtete Hand so verschiebt, dass sie einer optischen Hauptachse (X1) des optischen Sensors (4a) gegenüberliegt.

6. Erkennungsverfahren nach dem vorhergehenden Anspruch, bei dem man zum Durchführen des Erfassungsschrittes (A) zum Erfassen des Bildes (1) ein optisches Mittel (4b) zur künstlichen Beleuchtung verwendet, das eine Hauptbeleuchtungsachse (X2) aufweist, die ausgebildet ist, um die Hand zumindest zum Zeitpunkt der Erfassung des Bildes (1) durch den optischen Sensor (4a) zu beleuchten.

7. Erkennungsverfahren nach dem vorhergehenden Anspruch, bei dem der optische Sensor (4a) und das optische Beleuchtungsmittel (4b) mechanisch miteinander verbunden und angeordnet sind, damit die optische Achse (X1) und die Hauptbeleuchtungsachse (X2) zueinander parallel sind.

8. Erkennungsverfahren nach einem der vorhergehenden Ansprüche, bei dem das erfasste Bild (1) aus einer Reihe von Bildern stammt, die zu einem Videostrom gehören, der mit dem genannten optischen Sensor erzeugt wird.

9. Erkennungsverfahren nach dem vorhergehenden Anspruch, bei dem mindestens ein Bild des Videostroms auf einem Anzeigemittel (4c) angezeigt und das angezeigte Bild des Videostroms von einem graphischen Symbol (8), wie z. B. einem Rahmen, überlagert wird, das eine Stelle des Bildes (1) angibt, wo sich die genannte mindestens eine Zone (Z1d) des erfassten Bildes befindet, die in der Lage ist, mindestens einen Fingerabdruck darzustellen.

10. Erkennungsverfahren nach einem der vorhergehenden Ansprüche 8 oder 9, bei dem der Videostrom eine Folge von Bildern umfasst, wobei jedes der Bilder dieser Folge der Reihe nach als erfasstes Bild verwendet wird, wobei die Zonen, die in der Lage sind, mindestens einen Fingerabdruck zu enthalten, in jedem der Bilder der Folge von Bildern des Videostroms bestimmt werden.

11. Vorrichtung (11) zur Bestimmung in einem Bild mindestens einer Zone (Z1a, Z1b, Z1c, Z1d, Z2a, Z2b, Z2d, Z3a) dieses Bildes, die in der Lage ist, mindestens einen Fingerabdruck eines Individuums darzustellen, wobei diese Vorrichtung **dadurch gekennzeichnet ist, dass** sie dazu geeignet ist, das Verfahren nach einem der vorhergehenden Ansprüche durchzuführen.

12. Bestimmungsvorrichtung nach dem vorhergehenden Anspruch, derart, dass sie ein intelligentes Telefon, ein sogenanntes Smartphone, umfasst.

## Claims

1. Method of detecting zones (Z1a, Z1b, Z1c, Z1d, Z2a, Z2b, Z2d, Z3a) likely to contain at least one finger print (3) in an image (1) of at least one portion of hand (2) of an individual, the method comprising:
a) a step (A) of acquiring the image of at least one illuminated portion of hand (2) using an optical sensor (4a) and without contact with this hand (2); and the method being further **characterized in that** it also comprises :
b) a step (E) of determining a plurality of zones (Z1a, Z1b, Z1c, Z1d) of the acquired image (1), each zone thus determined being a continuous zone of points of the acquired image (1) which each exhibit a luminous intensity level (I) greater than or equal to a luminous intensity threshold value (Vsn, Vs1) selected for the determination of the zone thus determined; and
c) a first selection step (F) for selecting, from among the zones determined, the zones which are likely to represent at least one print of a finger (3), this selection (F) being carried out with the aid of at least one filtering criterion of a first type, chosen from among a finger shape identification criterion and/or a finger print standard texture identification criterion and/or a finger standard colour identification criterion and in which a set of threshold values (Vsn, Vs, Vs2, Vs3) of luminous intensity (I) lying between a minimum threshold value (Vsmin) of intensity (I) and a maximum threshold value (VsMax) of intensity (I) is selected and the step (E) of determining a plurality of zones of the acquired image is carried out using each of the threshold values (Vs1, Vs2, Vs3) of the set of threshold values (Vsn), and then the plurality of the zones (Z1a, Z1b, Z1c, Z1d, Z2a, Z2b, Z2d, Z3a) of the acquired image (1) which have been determined with each of the threshold values (Vs1, Vs2, Vs3) of the set of threshold values (Vsn) is stored.

2. Method of detection according to Claim 1, furthermore comprising a second selection step (G) consisting in filtering the previously selected zones (Z1a, Z1b, Z1c, Z1d, Z2a, Z2b, Z2d, Z3a) on completion of the first selection step (F), using at least one filtering criterion of a second type, chosen from among:
- a criterion of maximum separation between zones (Z1a, Z1b, Z1c, Z1d, Z2a, Z2b, Z2d, Z3a), this maximum separation criterion being determined so as to retain, in a set of retained zones, only zones previously selected on completion of the first selection step (F), which are mutually neighbouring and which are likely to represent solely portions of prints of fingers of one and the same hand (2); and/or
- a criterion of areal ratio between mutually neighbouring zones (Z1a, Z1b, Z1c, Z1d, Z2a, Z2b, Z2d, Z3a), this areal ratio criterion being determined so that the ratio between areas of mutually neighbouring zones lies between predetermined minimum and maximum values of areal ratio, the mutually neighbouring zones which meet this areal ratio criterion being retained in a set of retained zones; and/or
- a criterion of relative orientation between mutually neighbouring zones (Z1a, Z1b, Z1c, Z1d, Z2a, Z2b, Z2d, Z3a), the mutually neighbouring zones which meet this orientation criterion being retained in a set of retained zones.

3. Method of detection according to either one of Claims 1 and 2, in which the acquired image (1) is a colour image and, in order to determine the levels of luminous intensity (I) of the points of the acquired image (1), use is made of a grey level image (5) generated on the basis of the colour image acquired (1).

4. Method of detection according to any one of Claims 1 to 3, in which characteristics of each of the zones (Z1a, Z1b, Z1c, Z1d, Z2a, Z2b, Z2d, Z3a) of the set of retained zones are compared with characteristics of images of fingerprints contained in a prerecorded database (10) and, in case of a match between characteristics of one of the zones of the set of retained zones and of one of the fingerprints of the prerecorded database (10), then an identification link representative of this match is stored.

5. Method of detection according to any one of the preceding claims, in which, in order to carry out the step (A) of acquiring the image (1), the illuminated hand (2) is displaced facing a principal optical axis (X1) of the optical sensor (4a).

6. Method of detection according to the preceding claim, in which, in order to carry out the step (A) of acquiring the image (1), use is made of an optical means of artificial lighting (4b) exhibiting a principal lighting axis (X2) designed to illuminate the hand at least at the moment of the acquisition of the image (1) by the optical sensor (4a).

7. Method of detection according to the preceding claim, in which the optical sensor (4a) and the optical lighting means (4b) are mechanically interlinked and are designed so that the optical axis (X1) and the principal lighting axis (X2) are mutually parallel.

8. Method of detection according to any one of the preceding claims, in which the acquired image (1) arises from a series of images belonging to a video stream generated with the said optical sensor.

9. Method of detection according to the preceding claim, in which at least one image of the video stream is displayed on a display means (4c) and a graphical symbol (8), such as a frame, indicating a site of the image (1) where the said at least one zone (Z1d) of the acquired image which is likely to represent at least one finger print is situated is superimposed on the displayed image of the video stream.

10. Method of detection according to either one of Claims 8 and 9, in which the video stream comprises a succession of images, each of the images of this succession is used in turn as acquired image, the zones likely to contain at least one finger print are determined in each of the images of the succession of images of the video stream.

11. Determination device (11) for determining, in an image, at least one zone (Z1a, Z1b, Z1c, Z1d, Z2a, Z2b, Z2d, Z3a) of this image which is likely to represent at least one finger print of an individual, this device being **characterized in that** it is adapted to implement the method according to any one of the preceding claims.

12. Determination device according to the preceding claim, such that it comprises an intelligent telephone, a so-called smartphone.
